# EUROPÄISCHE PATENTSCHRIFT

(11) **EP 3 696 053 B1**
(45) Veröffentlichungstag und Bekanntmachung des Hinweises auf die Patenterteilung: **25.08.2021**
(21) Anmeldenummer: 20150736.5
(22) Anmeldetag: 08.01.2020
(51) Int. Cl.: B62D 6/00, B62D 5/00

(54) **STEER-BY-WIRE-LENKSYSTEM FÜR EIN FAHRZEUG UND VERFAHREN ZUM BETREIBEN EINES STEER-BY-WIRE-LENKSYSTEMS**
STEER-BY-WIRE STEERING SYSTEM FOR A VEHICLE AND METHOD FOR OPERATING A STEER-BY-WIRE STEERING SYSTEM
SYSTÈME DE DIRECTION PAR CÂBLES POUR UN VÉHICULE ET PROCÉDÉ DE FONCTIONNEMENT D'UN SYSTÈME DE DIRECTION PAR CÂBLES

(30) Priorität: 15.02.2019 DE 102019202091
(43) Veröffentlichungstag der Anmeldung: 19.08.2020
(73) Patentinhaber: VOLKSWAGEN AG, 38440 Wolfsburg (DE)
(72) Erfinder: Kreis, Christopher, 38126 Braunschweig (DE); Rüger, Tobias, 38106 Braunschweig (DE)

(56) Entgegenhaltungen:
- DE-A1-102017 203 456
- JP-A- 2008 265 687
- JP-B2- 5 271 551
- US-A1- 2018 346 021
- HONGYU ZHENG ET AL: "A bilateral control scheme for vehicle steer-by-wire system with road feel and steering controller design", TRANSACTIONS OF THE INSTITUTE OF MEASUREMENT AND CONTROL., Bd. 41, Nr. 3, 25. Februar 2019 (2019-02-25), Seiten 593-604, XP055711442, GB ISSN: 0142-3312, DOI: 10.1177/0142331217734502

## Beschreibung

Die Erfindung betrifft ein Steer-by-Wire-Lenksystem für ein Fahrzeug und ein Verfahren zum Betreiben eines Steer-by-Wire-Lenksystems.

In Fahrzeugen, insbesondere Kraftahrzeugen, werden elektromechanische Lenksysteme eingesetzt. Hierbei wird zusätzlich zu einer mechanischen Verbindung zwischen einem Lenkrad und lenkbaren Rädern in Abhängigkeit eines Lenkmoments an dem Lenkrad ein Unterstützungsmoment durch einen Radaktor aufgebracht. Fällt der Radaktor aus, so kann das Fahrzeug weiterhin über die mechanische Verbindung gelenkt werden. Das Lenkmoment wird hierbei mittels eines Drehstabs in Form eines Drehstabmoments erfasst und als Eingangswert für eine Lenkraftunterstützung verwendet, welche hieraus das von dem Radaktor aufzubringende Unterstützungsmoment berechnet.

Ferner sind Steer-by-Wire-Lenksysteme bekannt, bei denen keine mechanische Verbindung zwischen Lenkrad und den lenkbaren Rädern des Fahrzeugs mehr besteht. Diese Steer-by-Wire-Lenksysteme umfassen eine Lenkradeinheit und eine Radeinheit, welche mittels einer Kommunikationsverbindung miteinander verbunden sind. Eine erfasste Lenkbewegung des Lenkrads wird mittels eines Radaktors, beispielsweise eines Elektromotors, auf die Räder übertragen. Um auch ohne die mechanische Verbindung eine haptische Rückkopplung von den Rädern zu dem Lenkrad und hierdurch ein realistisches Lenkgefühl für den Fahrer zu ermöglichen, umfasst die Lenkradeinheit einen Lenkradaktor, beispielsweise einen Elektromotor, durch den das Lenkrad beschleunigt und gebremst werden kann, indem ein entsprechenden Moment aufgebracht wird.

Aus der DE 199 21 307 A1 ist ein Lenksystem mit mindestens einem Radaktor und mindestens einem Lenkradaktor bekannt, wobei eine Regelabweichung zwischen Sollwert und einer Regelgröße über das Lenkrad an den Fahrer weiterleitet wird. Aus der DE 100 51 864 A1 ist ebenfalls ein Steer-by-Wire-Lenksystem bekannt, welches eine Regelabweichung über das Lenkrad an den Fahrer weiterleitet.

Der Erfindung liegt die Aufgabe zu Grunde, ein Steer-by-Wire-Lenksystem und ein Verfahren zum Betreiben eines Steer-by-Wire-Lenksystems zu verbessern.

Die Aufgabe wird erfindungsgemäß durch ein Steer-by-Wire-Lenksystem mit den Merkmalen des Patentanspruchs 1 und ein Verfahren mit den Merkmalen des Patentanspruchs 10 gelöst. Vorteilhafte Ausgestaltungen der Erfindung ergeben sich aus den Unteransprüchen.

Insbesondere wird ein Steer-by-Wire-Lenksystem für ein Fahrzeug geschaffen, umfassend eine Lenkradeinheit, eine Radeinheit, und eine Kommunikationsverbindung zwischen der Lenkradeinheit und der Radeinheit, wobei die Lenkradeinheit einen Lenkradwinkelsensor zum Erfassen eines Lenkradwinkels eines Lenkrads des Fahrzeugs, einen Lenkradaktor zum Einstellen eines Lenkrad-Sollmoments an dem Lenkrad und eine Lenkradsteuerung zum Ansteuern des Lenkradaktors zumindest auf Grundlage des Lenkrad-Sollmoments aufweist, und wobei die Radeinheit einen Lenksensor zum Erfassen mindestens einer Lenk-Istgröße, mindestens einen Radaktor zum Einstellen einer Lenk-Sollgröße und eine Radsteuerung zum Ansteuern des Radaktors aufweist, wobei die Radsteuerung ferner derart ausgebildet ist, ein virtuelles Drehstabmoment auf Grundlage der Lenk-Sollgröße und der Lenk-Istgröße zu berechnen und den Radaktor auf Grundlage des berechneten virtuellen Drehstabmoments anzusteuern, und das berechnete virtuelle Drehstabmoment über die Kommunikationsverbindung an die Lenkradeinheit zu übermitteln, wobei die Lenkradsteuerung ferner derart ausgebildet ist, das Lenkrad-Sollmoment auf Grundlage des übermittelten virtuellen Drehstabmoments zu berechnen.

Ferner wird ein Verfahren zum Betreiben eines Steer-by-Wire-Lenksystems zur Verfügung gestellt, wobei das Steer-by-Wire-Lenksystem eine Lenkradeinheit, eine Radeinheit und eine Kommunikationsverbindung zwischen der Lenkradeinheit und der Radeinheit umfasst, wobei die Lenkradeinheit einen Lenkradwinkelsensor zum Erfassen eines Lenkradwinkels eines Lenkrads des Fahrzeugs, einen Lenkradaktor zum Einstellen eines Lenkrad-Sollmoments an dem Lenkrad und eine Lenkradsteuerung zum Ansteuern des Lenkradaktors zumindest auf Grundlage des Lenkrad-Sollmoments aufweist, und wobei die Radeinheit einen Lenksensor zum Erfassen mindestens einer Lenk-Istgröße, mindestens einen Radaktor zum Einstellen einer Lenk-Sollgröße und eine Radsteuerung zum Ansteuern des Radaktors aufweist, wobei die folgenden Schritte ausgeführt werden: Berechnen eines virtuellen Drehstabmoments auf Grundlage der Lenk-Sollgröße und der Lenk-Istgröße mittels der Radsteuerung, Ansteuern des Radaktors auf Grundlage des berechneten virtuellen Drehstabmoments mittels der Radsteuerung, Übermitteln des berechneten virtuellen Drehstabmoments über die Kommunikationsverbindung an die Lenkradeinheit, Berechnen des Lenkrad-Sollmoments auf Grundlage des übermittelten virtuellen Drehstabmoments mittels der Lenkradsteuerung.

Der Vorteil der Erfindung ist, dass ein virtuelles Drehstabmoment berechnet und bereitgestellt wird. Das berechnete virtuelle Drehstabmoment wird anschließend zur Steuerung des Radaktors verwendet. Dies ermöglicht es, dass bereits von einer klassischen elektromechanischen Lenkung bekannte und dort verwendete Strukturen von Lenkkraftunterstützungseinrichtungen (hardware- und/oder softwarebasiert), welche als Eingangswerte mit Drehstabmomenten arbeiten, übernommen und weiterverwendet werden können. Hierdurch können Entwicklungskosten und Aufwand eingespart werden. Anstatt eines an einem Drehstab gemessenen Drehstabmoments wird der Lenkkraftunterstützungseinrichtung das berechnete virtuelle Drehstabmoment als Eingangswert bereitgestellt. Die Lenkkraftunterstützungseinrichtung berechnet dann auf Grundlage des virtuellen Drehstabmoments und bekannten Kennfeldern ein mittels des Radaktors aufzubringendes Motormoment.

Ferner wird das berechnete virtuelle Drehstabmoment zusätzlich an die Lenkradeinheit übermittelt und dient dort als Grundlage zum Berechnen des Lenkrad-Sollmoments. Durch die Rückführung des virtuellen Drehstabmoments kann eine besonders gute haptische Rückkopplung des Lenksystems bereitgestellt werden. Das virtuelle Drehstabmoment ist implizit im Lenksystem vorhanden und ermöglicht es, auf aufwändige physikalische Modelle, wie sie im Stand der Technik beispielsweise in Form eines Zahnstangenbeobachters verwendet werden, zu verzichten. Alle Informationen, die bei einem klassischen elektromechanischen Lenksystem ein Lenkgefühl bestimmen, sind hierbei im virtuellen Drehstabmoment enthalten. Dies schließt sowohl Fahrbahnunebenheiten als auch eine mechanische Systemreibung ein. In der Folge kann eine besonders natürliche und für einen Fahrer gewohnte und damit besonders angenehme haptische Rückkopplung am Lenkrad zur Verfügung gestellt werden.

Die Lenk-Istgröße und die Lenk-Sollgröße können beispielsweise in Form von einem Ist-Lenkwinkel und einem Soll-Lenkwinkel oder aber auch in Form einer Zahnstangen-Istposition und einer Zahnstangen-Sollposition verwendet werden. Es ist hierbei auch möglich, dass Umrechnungen zwischen den unterschiedlichen Darstellungen vorgenommen werden, beispielsweise kann eine Zahnstangenposition in einen Lenkwinkel umgerechnet werden und umgekehrt.

Insbesondere ist vorgesehen, dass ein erfasster aktueller Lenkradwinkel und eine aus Lenkradwinkeln abgeleitete Lenkradwinkelgeschwindigkeit von der Lenkradeinheit über die Kommunikationsverbindung an die Radeinheit übermittelt wird. In der Radeinheit wird hieraus die Lenk-Sollgröße, beispielsweise ein Soll-Lenkwinkel oder eine Soll-Zahnstangenposition, berechnet. Die Radeinheit übermittelt insbesondere das berechnete virtuelle Drehstabmoment an die Lenkradeinheit.

Teile des Steer-by-Wire-Lenksystems, insbesondere die Lenkradsteuerung und/oder die Radsteuerung, können einzeln oder zusammengefasst als eine Kombination von Hardware und Software ausgebildet sein, beispielsweise als Programmcode, der auf einem Mikrocontroller oder Mikroprozessor ausgeführt wird.

In einer Ausführungsform ist vorgesehen, dass die Radsteuerung derart ausgebildet ist, das virtuelle Drehstabmoment auf Grundlage einer Winkeldifferenz zwischen einem von der Lenkradeinheit über einen übermittelten Lenkradwinkel vorgegebenen Soll-Lenkwinkel und einem aus der erfassten Lenk-Istgröße abgeleiteten Ist-Lenkwinkel zu berechnen. Das virtuelle Drehstabmoment ist hierbei proportional zu der Winkeldifferenz, wobei eine Proportionalitätskonstante abhängig ist von einer Steifigkeit des virtuellen Drehstabs (im einfachsten Fall gilt: virtuelles Drehstabmoment = Steifigkeit * Winkeldifferenz). Die Steifigkeit wird hierbei insbesondere vorgegeben, beispielsweise können empirisch bestimmte Werte für die Steifigkeit oder Werte von Drehstäben in bekannten elektromechanischen Lenksystemen verwendet werden. Auch eine manuelle Vorgabe oder Auswahl durch einen Fahrer des Fahrzeugs ist prinzipiell möglich. Hierdurch kann der Fahrer beispielsweise eine Präferenz für eine Steifigkeit wählen, welche sich dann auf das Lenkverhalten und auf die haptische Rückkopplung auswirkt. Dies ermöglicht eine besonders einfache und schnelle Berechnung des virtuellen Drehstabmoments. Die Steifigkeit wird insbesondere so hoch wie möglich gewählt, unter Berücksichtigung der Bedingung, dass der Regelkreis stabil arbeitet.

In einer weiteren Ausführungsform ist vorgesehen, dass die Radsteuerung ferner derart ausgebildet ist, einen Dämpfungsanteil des virtuellen Drehstabmoments auf Grundlage einer Winkelgeschwindigkeitsdifferenz zwischen einer von der Lenkradeinheit übermittelte Lenkradwinkelgeschwindigkeit und einer aus erfassten Lenk-Istgrößen abgeleiteten Lenkradwinkelgeschwindigkeit zu berechnen. Die Winkelgeschwindigkeitsdifferenz drückt hierbei eine Relativgeschwindigkeit aus. Der Dämpfungsanteil entspricht einer in dem Lenksystem auftretenden Reibung. Im einfachsten Fall ist das Dämpfungsmoment proportional (einfacher Proportionalitätsfaktor) zu dieser Relativgeschwindigkeit. Alternativ zu einem konstanten Proportionalitätsfaktor kann auch eine Kennlinie verwendet werden, um nichtlineare Effekte zu berücksichtigen. Durch Berücksichtigung des Dämpfungsanteils kann die haptische Rückkopplung weiter verbessert werden.

In einer weiterbildenden Ausführungsform ist vorgesehen, dass die Radsteuerung ferner derart ausgebildet ist, den berechneten Dämpfungsanteil und eine von der Radsteuerung verwendete Lenkradwinkelgeschwindigkeit an die Lenkradeinheit zu übermitteln, wobei die Lenkradeinheit ferner derart ausgebildet ist, das übermittelte virtuelle Drehstabmoment auf Grundlage des übermittelten Dämpfungsanteils und einer aus aktuell erfassten Lenkradwinkeln abgeleiteten Lenkradwinkelgeschwindigkeit und der übermittelten verwendeten Lenkradwinkelgeschwindigkeit zu korrigieren. Hierbei ist insbesondere vorgesehen, dass in der Lenkradsteuerung auf Grundlage eines aktuellen Lenkradwinkels der übermittelte Dämpfungsanteil aktualisiert wird. Hierdurch können Verzögerungen, die durch das Übermitteln und das Berechnen entstanden sind, ausgeglichen werden. Aus einer von der Radeinheit an die Lenkradeinheit übermittelten verwendeten Lenkradwinkelgeschwindigkeit und einer in der Lenkradeinheit bestimmten aktuellen Lenkradwinkelgeschwindigkeit wird eine Differenz der Lenkradwinkelgeschwindigkeiten, das heißt eine Relativwinkelgeschwindigkeit, berechnet. Aus dieser wird, wie voranstehend bereits beschrieben, in der Lenkradeinheit der Dämpfungsanteil berechnet. Der übermittelte Dämpfungsanteil und der in der Lenkradeinheit berechnete Dämpfungsanteil können miteinander verglichen werden, um anschließend einen aktualisierten Dämpfungsanteil des Dämpfungsmoments bereitzustellen. Der aktualisierte Dämpfungsanteil wird anschließend zu einer Korrektur des virtuellen Drehstabmoments verwendet. Der Vorteil ist, dass eine Reglerabweichung in einem zum Regeln des vom Lenkradaktor aufzubringenden Lenkrad-Sollmoments verwendeten Lenkradmomentenregler der Lenkradsteuerung hierdurch reduziert werden kann. Der Lenkradmomentenregler kann innerhalb seiner Stabilitätsgrenzen dann besser ausparametriert werden. Insbesondere reduziert diese Vorgehensweise eine Totzeit des Steer-by-Wire-Lenksystems, sodass eine größere Verstärkung im als Regelkreis arbeitenden Steer-by-Wire-Lenksystem eingestellt werden kann, was eine Regelabweichung verringert. Dies führt zu einem besseren Anlenkverhalten, einem geringeren Phasenverzug zwischen dem Lenkrad und einer Bewegung der Räder und zu einem stetigeren und geglätteten Signalverlauf des Momentes am Lenkrad. Eine haptische Rückkopplung am Lenkrad und somit das von einem Fahrer erfahrende Lenkgefühl kann hierdurch verbessert werden. Insbesondere kann hierdurch das Lenkgefühl eines herkömmlichen elektromechanischen Lenksystems nachgebildet werden. Die verwendete Lenkradwinkelgeschwindigkeit ist hierbei insbesondere die, gegebenenfalls nachbearbeitete, Lenkradwinkelgeschwindigkeit, die von der Radsteuerung zum Regeln verwendet wurde.

In einer Ausführungsform ist vorgesehen, dass die Lenkradeinheit ferner derart ausgebildet ist, eine vor dem Übermitteln jeweils auftretende Sendeverzögerung zu ermitteln und die jeweils ermittelte Sendeverzögerung ebenfalls zu übermitteln, wobei die Radeinheit ferner derart ausgebildet ist, zumindest von der Lenkradeinheit übermittelte Lenkradwinkel und/oder übermittelte Lenkradwinkelgeschwindigkeiten auf Grundlage der jeweils übermittelten Sendeverzögerung zu interpolieren und/oder dass die Radeinheit ferner derart ausgebildet ist, eine vor dem Übermitteln jeweils auftretende Sendeverzögerung zu ermitteln und die jeweils ermittelte Sendeverzögerung ebenfalls zu übermitteln, wobei die Lenkradeinheit ferner derart ausgebildet ist, zumindest von der Radeinheit übermittelte virtuelle Drehstabmomente und/oder übermittelte verwendete Lenkradwinkelgeschwindigkeiten auf Grundlage der jeweils übermittelten Sendeverzögerung zu interpolieren. Interpolieren soll hierbei insbesondere ein Interpolieren auf einen vorgegebenen Zeitpunkt bzw. einen vorgegebenen Zeitpunkt in einem (regelmäßigen) Zeitraster bezeichnen. Die Sendeverzögerung umfasst die gesamte Signallaufzeit von einem Erfassen bzw. Berechnen eines zu übermittelnden Wertes bis zu dem Zeitpunkt, an dem der Wert in Form einer Nachricht über die Kommunikationsverbindung übermittelt wird. Die Sendeverzögerung kann beispielsweise durch das Erfassen bzw. Auslesen von Zeitstempeln einer Systemzeit der jeweiligen Steuerungen bestimmt werden. Hierzu wird eine Differenz aus den Zeitstempeln eines Sendezeitpunkts und eines Bereitstellungszeitpunkts, an dem der übermittelte Wert berechnet oder erfasst wurde, gebildet. Es kann vorgesehen sein, dass die Sendeverzögerung mit der gleichen Nachricht versandt wird, wobei die Sendeverzögerung in diesem Fall abgeschätzt wird, da der reale Sendezeitpunkt erst nach einem Übermitteln der Nachricht zur Verfügung gestellt werden kann. Es kann aber auch vorgesehen sein, dass die Sendeverzögerung erst mit der nächsten, nachfolgenden Nachricht übermittelt wird. Auf einer jeweiligen Gegenseite wird der jeweils übermittelte Wert dann auf Grundlage der jeweils ermittelten Sendeverzögerung interpoliert, sodass die Werte in einem regelmäßigen Zeitraster vorliegen und Schwankungen ausgeglichen werden können. Das Interpolieren führt zu einem geglätteten und unverfälschten Verlauf der jeweiligen Werte, sodass auch ein Weiterverarbeiten der Werte in der Lenkradsteuerung bzw. der Radsteuerung mit einem geglätteten und unverfälschten Signal erfolgen kann. Ferner kann hierdurch auf einen Einsatz von Filtern zur Signalglättung verzichtet werden, welche immer zu einem Zeitverzug führen, der negative Auswirkungen auf eine Stabilität, ein Anlenkverhalten und eine Phasenlage des Lenksystems hat. Im einfachsten Fall wird eine lineare Interpolation verwendet. Es können jedoch auch komplexere Interpolationsverfahren verwendet werden, wie beispielsweise eine Interpolation mittels höhergradigen Polynomen, eine stückweise Interpolation (z.B. Spline-Interpolation) etc.

In einer weiteren Ausführungsform ist vorgesehen, dass die Lenkradsteuerung derart ausgebildet ist, den Lenkradaktor zum aktiven Rückstellen des Lenkrads anzusteuern. Hierbei wird insbesondere angestrebt, dass am Lenkrad stets ein Moment anliegt, das das Lenkrad zurück in eine Geradeaus- bzw. Mittenstellung führt.

In einer weiteren Ausführungsform ist vorgesehen, dass die Kommunikationsverbindung als Controller Area Network-(CAN)-Bus oder FlexRay-Bus oder CAN FD-Bus ausgebildet ist. Insbesondere ist in einer bevorzugten Ausführungsform vorgesehen, dass die Kommunikationsverbindung als CAN FD-Bus ausgebildet ist. Da dieser eine hohe Datenübertragungsrate bereitstellt, kann eine haptische Rückkopplung des Lenksystems verbessert werden, da aktuelle virtuelle Drehstabmomente mit einer hohen Taktrate übertragen werden können.

In einer Ausführungsform ist vorgesehen, dass die Radsteuerung eine Reibungskompensationseinrichtung und/oder eine Trägheitskompensationseinrichtung und/oder eine Stabilitäts- und Dynamikeinrichtung umfasst. Insbesondere können hierbei aufgrund des beschriebenen Steer-by-Wire-Lenksystems bereits bestehende Strukturen aus herkömmlichen elektromechanischen Lenksystemen übernommen werden, wodurch Entwicklungskosten eingespart werden können.

In einer Ausführungsform ist vorgesehen, dass die Radsteuerung ferner derart ausgebildet ist, das virtuelle Drehstabmoment auf Grundlage von zumindest einer weiteren Eingangsvariable zu berechnen. Insbesondere kann vorgesehen sein, eine Steifigkeit und/oder eine Dämpfung bzw. eine Dämpfungskonstante für das beim Berechnen des virtuellen Drehstabmoments verwendeten Modells des virtuellen Drehstabs anzupassen. Hierdurch kann das Lenkverhalten und die haptische Rückkopplung insbesondere dynamisch beeinflusst werden. Als Eingangsvariablen können z.B. eine Fahrzeuggeschwindigkeit, ein Fahrbahnreibwert oder eine Auswahl einer Fahrmodus- oder Sport-Einstellung, insbesondere zum Anpassen eines Ansprechverhaltens und/oder eines Lenkgefühls, dienen.

Das erfindungsgemäße Verfahren weist dieselben Vorteile wie die entsprechenden Merkmale des Steer-by-Wire-Lenksystems auf.

Nachfolgend wird die Erfindung anhand bevorzugter Ausführungsbeispiele unter Bezugnahme auf die Figuren näher erläutert. Hierbei zeigen:
- Fig. 1: eine schematische Darstellung eines Steer-by-Wire-Lenksystems;
- Fig. 2: eine schematische Darstellung einer Ausführungsform des Steer-by-Wire-Lenksystems für ein Fahrzeug;
- Fig. 3: eine schematische Darstellung einer weiteren Ausführungsform des Steer-by-Wire-Lenksystems für ein Fahrzeug.

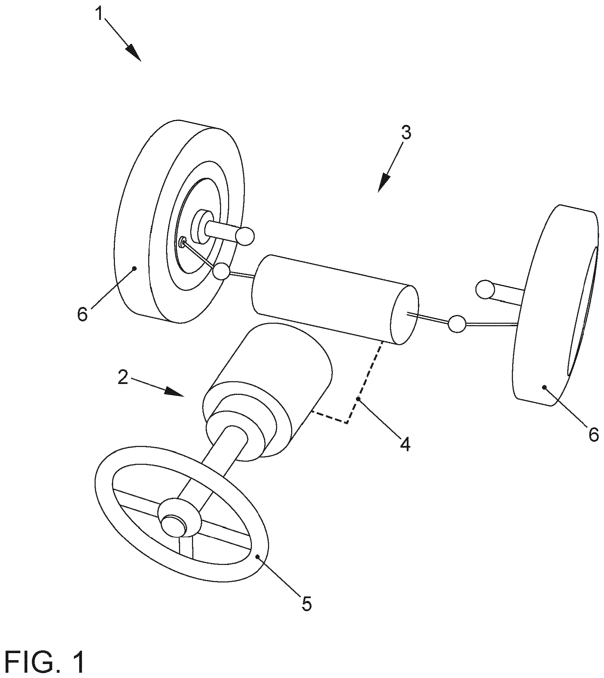

In Fig. 1 ist eine schematische Darstellung eines Steer-by-Wire-Lenksystems 1 für ein Fahrzeug gezeigt. Das Steer-by-Wire-Lenksystem 1 umfasst eine Lenkradeinheit 2, eine Radeinheit 3 und eine Kommunikationsverbindung 4. Über die Kommunikationsverbindung 4 können die Lenkradeinheit 2 und die Radeinheit 3 miteinander kommunizieren und beispielsweise Sollwerte und Istwerte austauschen. Eine mechanische Verbindung zwischen einem Lenkrad 5 und den Rädern 6 besteht nicht.

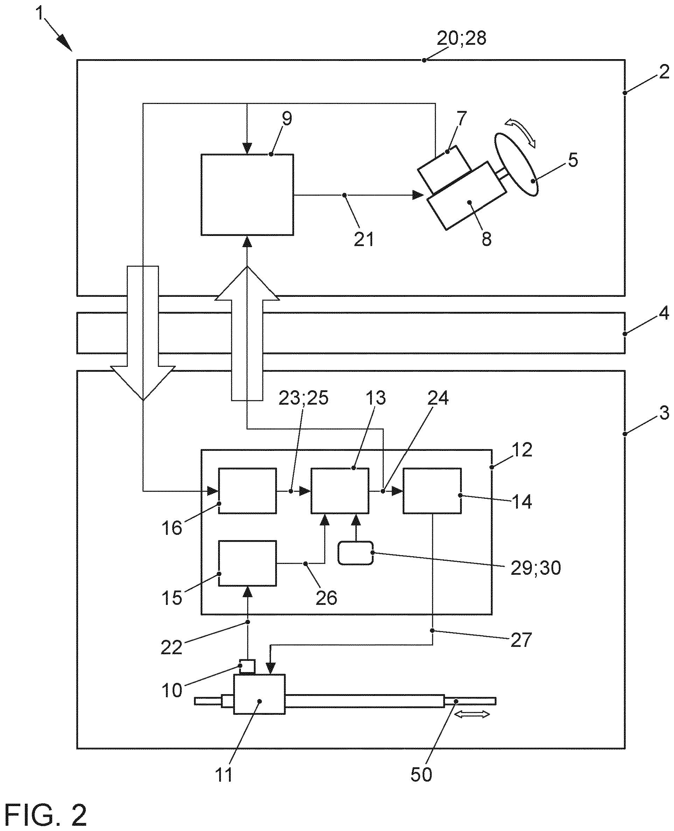

In Fig. 2 ist eine schematische Darstellung einer Ausführungsform des Steer-by-Wire-Lenksystems 1 für ein Fahrzeug gezeigt. Das Steer-by-Wire-Lenksystem 1 umfasst eine Lenkradeinheit 2, eine Radeinheit 3 und eine Kommunikationsverbindung 4. Die Kommunikationsverbindung 4 ist bevorzugt in Form eines CAN FD-Bus ausgebildet.

Die Lenkradeinheit 2 weist einen Lenkradwinkelsensor 7 zum Erfassen eines Lenkradwinkels 20 eines Lenkrads 5 des Fahrzeugs, einen Lenkradaktor 8 zum Einstellen eines Lenkrad-Sollmoments 21 an dem Lenkrad 5 und eine Lenkradsteuerung 9 zum Ansteuern des Lenkradaktors 8 zumindest auf Grundlage des Lenkrad-Sollmoments 21 auf. Die Lenkradeinheit 2 übermittelt über die Kommunikationsverbindung 4 den erfassten Lenkradwinkel 20 und eine daraus abgeleitete Lenkradwinkelgeschwindigkeit 28.

Die Radeinheit 3 weist einen Lenksensor 10 zum Erfassen mindestens einer Lenk-Istgröße 22, mindestens einen Radaktor 11 zum Einstellen einer Lenk-Sollgröße 23 und eine Radsteuerung 12 zum Ansteuern des Radaktors 11 auf. Ein Lenkwinkel der Räder 6 (Fig. 1) wird im gezeigten Ausführungsbeispiel mittels einer Zahnstange 50 eingestellt, die beispielsweise über ein Ritzel von dem Radaktor 11 bewegt und positioniert werden kann. Als Lenk-Istgröße 22 kann beispielweise eine Zahnstangenposition oder ein Lenkwinkel erfasst und der Radsteuerung 12 zugeführt werden. Die konkrete Ausführungsform, bei der eine Lenkung der Räder mittels einer Zahnstange 50 bewirkt wird, ist lediglich beispielshaft gewählt. Prinzipiell kann das Einstellen eines Lenkwinkels an den Rädern auch auf andere Weise erfolgen.

Die Radsteuerung 12 umfasst ferner eine Drehstabmomentberechnungseinrichtung 13 und eine Lenkkraftunterstützungseinrichtung 14. Die Drehstabmomentberechnungseinrichtung 13 berechnet auf Grundlage der Lenk-Sollgröße 23 und der Lenk-Istgröße 22 ein virtuelles Drehstabmoment 24. Hierbei wird eine Steifigkeit 29 des virtuellen Drehstabs von außen vorgegeben. Alternativ kann die Steifigkeit 29 auch auf Grundlage mindestens einer weiteren Eingangsvariable 30 von der Drehstabmomentberechnungseinrichtung 13 berechnet oder abgeleitet werden.

Die Radsteuerung 12 berechnet das virtuelle Drehstabmoment 24 hierbei insbesondere auf Grundlage einer Winkeldifferenz zwischen einem von der Lenkradeinheit 2 über einen übermittelten Lenkradwinkel 20 vorgegebenen Soll-Lenkwinkel 25 und einem aus der erfassten Lenk-Istgröße 22 abgeleiteten Ist-Lenkwinkel 26. Die Umrechnung des Lenkradwinkels 20 in den Soll-Lenkwinkel 25 erfolgt in einer hierfür eingerichteten Umrechnungseinrichtung 15. Die Umrechnung der Lenk-Istgröße 22 in den Ist-Lenkwinkel 26 erfolgt in einer hierfür eingerichteten Umrechnungseinrichtung 16.

Über die Lenkkraftunterstützungseinrichtung 14 steuert die Radsteuerung 12 den Radaktor 11 durch Ausgeben eines Soll-Motormoments 27 anschließend an. Dies erfolgt auf Grundlage des berechneten virtuellen Drehstabmoments 24. Hierdurch können bereits vorhandene Strukturen einer Lenkkraftunterstützung, wie diese aus klassischen, elektromechanischen Lenksystemen bekannt sind, weiterverwendet werden. Beispielsweise können Kennlinienfelder eines klassischen elektromechanischen Lenksystems beibehalten werden. Dies ermöglicht eine kostensparende Weiterverwendung bereits vorhandener Strukturen.

Darüber hinaus übermittelt die Radsteuerung 12 das berechnete virtuelle Drehstabmoment 24 über die Kommunikationsverbindung 4 an die Lenkradeinheit 2. Die Lenkradsteuerung 9 der Lenkradeinheit 2 berechnet das Lenkrad-Sollmoment 21 dann auf Grundlage des übermittelten virtuellen Drehstabmoments 24. Da die in Form des virtuellen Drehstabmoments 24 ausgedrückte Regelabweichung des Lenksystems 1 sämtliche Informationen des Lenksystems 1 umfasst, kann eine haptische Rückkopplung am Lenkrad 5 hierdurch verbessert werden.

Es kann vorgesehen sein, dass zusätzlich ein Dämpfungsanteil bzw. ein Dämpfungsmoment des virtuellen Drehstabs aus einer Winkelgeschwindigkeitsdifferenz berechnet wird.

Teile des Steer-by-Wire-Lenksystems 1, insbesondere die Lenkradsteuerung 9 und/oder die Radsteuerung 12, können einzeln oder zusammengefasst als eine Kombination von Hardware und Software ausgebildet sein, beispielsweise als Programmcode, der auf einem Mikrocontroller oder Mikroprozessor ausgeführt wird.

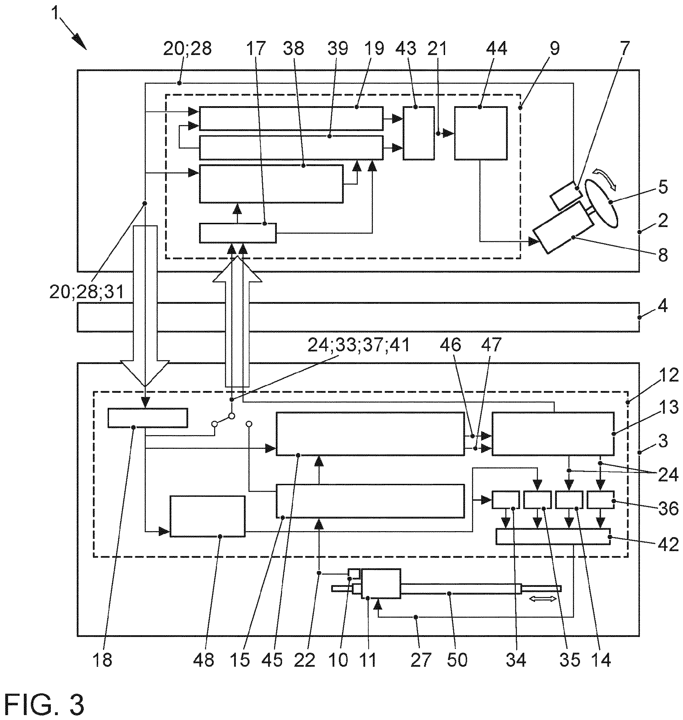

In Fig. 3 ist eine schematische Darstellung einer weiteren Ausführungsform des Steer-by-Wire-Lenksystems 1 für ein Fahrzeug gezeigt. Das gezeigte Lenksystem 1 ist prinzipiell wie die in der Fig. 2 gezeigte Ausführungsform aufgebaut, gleiche Bezugszeichen bezeichnen gleiche Merkmale und Begriffe.

Eine Winkeldifferenz 46 zwischen einem von der Lenkradeinheit 2 über einen übermittelten Lenkradwinkel 20 vorgegebenen Soll-Lenkwinkel und einem aus der erfassten Lenk-Istgröße 22 abgeleiteten Ist-Lenkwinkel und eine zugehörige Winkelgeschwindigkeitsdifferenz 47 werden in der gezeigten Ausführungsform mittels eines Differenzberechnungseinrichtung 45 berechnet. Die Differenzen 46, 47 werden zum Berechnen des virtuellen Drehstabmoments 24 anschließend der Drehstabmomentberechnungseinrichtung 13 zugeführt.

Es kann vorgesehen sein, dass in der Drehstabmomentberechnungseinrichtung 13 zusätzlich ein Dämpfungsanteil bzw. ein Dämpfungsmoment des virtuellen Drehstabs aus der Winkelgeschwindigkeitsdifferenz 47 berechnet wird. Es ist dann vorgesehen, dass die Radsteuerung 3 den berechneten Dämpfungsanteil 37 und eine von der Radsteuerung 3 verwendete Lenkradwinkelgeschwindigkeit 33 über die Kommunikationsverbindung 4 an die Lenkradeinheit 2 übermittelt. Die Lenkradeinheit 2 weist ferner eine Korrekturwertberechnungseinrichtung 38 und eine Korrektureinrichtung 39 auf, die das übermittelte virtuelle Drehstabmoment 24 auf Grundlage des übermittelten Dämpfungsanteils 37 und der aus aktuell erfassten Lenkradwinkeln 20 abgeleiteten Lenkradwinkelgeschwindigkeit 28 und der übermittelten verwendeten Lenkradwinkelgeschwindigkeit 33 korrigieren.

In der gezeigten Ausführungsform weisen die Lenkradsteuerung 9 und die Radsteuerung 12 ferner jeweils Interpolationseinrichtungen 17, 18 auf. Die Interpolationseinrichtung 18 der Radsteuerung 12 interpoliert von der Lenkradeinheit 2 an die Radeinheit 3 übermittelte Lenkradwinkel 20 und übermittelte Lenkradwinkelgeschwindigkeiten 28 auf Grundlage einer ermittelten Sendeverzögerung 31 auf vorgegebene, insbesondere regelmäßig angeordnete, Zeitpunkte. Die Interpolation kann beispielsweise eine lineare Interpolation sein. Es können jedoch auch andere Interpolationsverfahren verwendet werden. Die Sendeverzögerung 31 wird jeweils von der Lenkradsteuerung 2 ermittelt und ebenfalls an die Radeinheit 3 übermittelt. Die Interpolationseinrichtung 17 der Lenkradsteuerung 9 interpoliert von der Radeinheit 3 an die Lenkradeinheit 2 übermittelte virtuelle Drehstabmomente 24 und übermittelte verwendete Lenkradwinkelgeschwindigkeiten 33 auf Grundlage einer ermittelten Sendeverzögerung 41 auf vorgegebene, insbesondere regelmäßig angeordnete, Zeitpunkte. Die Sendeverzögerung 41 wird jeweils von der Radsteuerung 3 ermittelt und ebenfalls an die Lenkradeinheit 2 übermittelt. Durch das Interpolieren der jeweiligen Werte lassen sich zeitliche Schwankungen beim Verarbeiten und Übermitteln ausgleichen, sodass ein geglätteter Signalfluss bereitgestellt werden kann. Dies führt zu einem verbesserten Lenkverhalten und insbesondere zu einer verbesserten haptischen Rückkopplung am Lenkrad 5.

Es kann ferner vorgesehen sein, dass die Lenkradsteuerung eine Rückstellungseinrichtung 19 aufweist, welche den Lenkradaktor 8 zum aktiven Rückstellen des Lenkrads 5, insbesondere in Richtung einer Geradeaus- oder Mittenstellung, ansteuert.

Die Momente, welche von der Rückstellungseinrichtung 19 und der Korrektureinrichtung 39 bereitgestellt werden, werden in einem Summierer 43 summiert und mittels eines Lenkradmomentreglers 44 in Form eines Lenkrad-Sollmoments 21 am Lenkradaktor 8 eingestellt.

Es kann ferner vorgesehen sein, dass die Radsteuerung eine Reibungskompensationseinrichtung 34, eine Trägheitskompensationseinrichtung 35 und/oder eine Stabilitäts- und Dynamikeinrichtung 36 umfasst. Diese Einrichtungen 34, 35, 36 sind an sich aus klassischen elektromechanischen Lenksystemen bekannt und wirken im Steer-by-Wire-Lenksystem 1 in bekannter Weise. Die jeweiligen Ausgangssignale, das heißt jeweils berechnete Soll-Motormomente für den Radaktor 11, werden in einem Summierer 42 zu einem Soll-Motormoment 27 aufsummiert. Eingangssignale für die Reibungskompensationseinrichtung 34 und die Trägheitskompensationseinrichtung 35 können, beispielsweise zum Bereitstellen einer Zahnstangengeschwindigkeit, mittels einer Umrechnungseinrichtung 48 aus der von der Lenkradeinheit 2 an die Radeinheit 3 übermittelten Lenkradwinkelgeschwindigkeit 28 abgeleitet werden.

### Bezugszeichenliste

- 1: Steer-by-Wire-Lenksystem
- 2: Lenkradeinheit
- 3: Radeinheit
- 4: Kommunikationsverbindung
- 5: Lenkrad
- 6: Rad
- 7: Lenkradwinkelsensor
- 8: Lenkradaktor
- 9: Lenkradsteuerung
- 10: Lenksensor
- 11: Radaktor
- 12: Radsteuerung
- 13: Drehstabmomentberechnungseinrichtung
- 14: Lenkkraftunterstützungseinrichtung
- 15: Umrechnungseinrichtung
- 16: Umrechnungseinrichtung
- 17: Interpolationseinrichtung
- 18: Interpolationseinrichtung
- 19: Rückstellungeinrichtung
- 20: Lenkradwinkel
- 21: Lenkrad-Sollmoment
- 22: Lenk-Istgröße
- 23: Lenk-Sollgröße
- 24: virtuelles Drehstabmoment
- 25: Soll-Lenkwinkel
- 26: Ist-Lenkwinkel
- 27: Soll-Motormoment
- 28: Lenkradwinkelgeschwindigkeit
- 29: Steifigkeit
- 30: Eingangsvariable
- 31: Sendeverzögerung
- 33: verwendete Lenkradwinkelgeschwindigkeit
- 34: Reibungskompensationseinrichtung
- 35: Trägheitskompensationseinrichtung
- 36: Stabilitäts- und Dynamikeinrichtung
- 37: Dämpfungsanteil
- 38: Korrekturwertberechnungseinrichtung
- 39: Korrektureinrichtung
- 41: Sendeverzögerung
- 42: Summierer
- 43: Summierer
- 44: Lenkradmomentregler
- 45: Differenzberechnungseinrichtung
- 46: Winkeldifferenz
- 47: Winkelgeschwindigkeitsdifferenz
- 48: Umrechnungseinrichtung
- 50: Zahnstange

## Patentansprüche

1. Steer-by-Wire-Lenksystem (1) für ein Fahrzeug, umfassend:
eine Lenkradeinheit (2),
eine Radeinheit (3), und
eine Kommunikationsverbindung (4) zwischen der Lenkradeinheit (2) und der Radeinheit (3),
wobei die Lenkradeinheit (2) einen Lenkradwinkelsensor (7) zum Erfassen eines Lenkradwinkels (20) eines Lenkrads (5) des Fahrzeugs,
einen Lenkradaktor (8) zum Einstellen eines Lenkrad-Sollmoments (21) an dem Lenkrad (5) und
eine Lenkradsteuerung (9) zum Ansteuern des Lenkradaktors (8) zumindest auf Grundlage des Lenkrad-Sollmoments (21) aufweist, und
wobei die Radeinheit (3) einen Lenksensor (10) zum Erfassen mindestens einer Lenk-Istgröße (22),
mindestens einen Radaktor (11) zum Einstellen einer Lenk-Sollgröße (23) und eine Radsteuerung (12) zum Ansteuern des Radaktors (11) aufweist,
**dadurch gekennzeichnet**, das
die Radsteuerung (12) ferner derart ausgebildet ist, ein virtuelles Drehstabmoment (24) auf Grundlage der Lenk-Sollgröße (23) und der Lenk-Istgröße (22) zu berechnen und den Radaktor (11) auf Grundlage des berechneten virtuellen Drehstabmoments (24) anzusteuern, und
das berechnete virtuelle Drehstabmoment (24) über die Kommunikationsverbindung (4) an die Lenkradeinheit (2) zu übermitteln,
wobei die Lenkradsteuerung (9) ferner derart ausgebildet ist, das Lenkrad-Sollmoment (21) auf Grundlage des übermittelten virtuellen Drehstabmoments (24) zu berechnen.

2. Steer-by-Wire-Lenksystem (1) nach Anspruch 1, **dadurch gekennzeichnet, dass** die Radsteuerung (12) derart ausgebildet ist, das virtuelle Drehstabmoment (24) auf Grundlage einer Winkeldifferenz zwischen einem von der Lenkradeinheit (2) über einen übermittelten Lenkradwinkel (20) vorgegebenen Soll-Lenkwinkel (25) und einem aus der erfassten Lenk-Istgröße(22) abgeleiteten Ist-Lenkwinkel (26) zu berechnen.

3. Steer-by-Wire-Lenksystem (1) nach Anspruch 1 oder 2, **dadurch gekennzeichnet, dass** die Radsteuerung (12) ferner derart ausgebildet ist, einen Dämpfungsanteil (37) des virtuellen Drehstabmoments (24) auf Grundlage einer Winkelgeschwindigkeitsdifferenz zwischen einer von der Lenkradeinheit (2) übermittelten Lenkradwinkelgeschwindigkeit (28) und einer aus erfassten Lenk-Istgrößen (22) abgeleiteten Lenkradwinkelgeschwindigkeit zu berechnen.

4. Steer-by-Wire-Lenksystem (1) nach Anspruch 3, **dadurch gekennzeichnet, dass** die Radsteuerung (12) ferner derart ausgebildet ist, den berechneten Dämpfungsanteil (37) und eine von der Radsteuerung (12) verwendete Lenkradwinkelgeschwindigkeit (33) an die Lenkradeinheit (2) zu übermitteln,
wobei die Lenkradeinheit (2) ferner derart ausgebildet ist, das übermittelte virtuelle Drehstabmoment (24) auf Grundlage des übermittelten Dämpfungsanteils (37) und einer aus aktuell erfassten Lenkradwinkeln (20) abgeleiteten Lenkradwinkelgeschwindigkeit (28) und der übermittelten verwendeten Lenkradwinkelgeschwindigkeit (33) zu korrigieren.

5. Steer-by-Wire-Lenksystem (1) nach einem der vorangegangenen Ansprüche, **dadurch gekennzeichnet, dass** die Lenkradeinheit (2) ferner derart ausgebildet ist, eine vor dem Übermitteln jeweils auftretende Sendeverzögerung (31) zu ermitteln und die jeweils ermittelte Sendeverzögerung (31) ebenfalls zu übermitteln, wobei die Radeinheit (3) ferner derart ausgebildet ist, zumindest von der Lenkradeinheit (2) übermittelte Lenkradwinkel (20) und/oder übermittelte Lenkradwinkelgeschwindigkeiten (28) auf Grundlage der jeweils übermittelten Sendeverzögerung (31) zu interpolieren und/oder
dass die Radeinheit (3) ferner derart ausgebildet ist, eine vor dem Übermitteln jeweils auftretende Sendeverzögerung (41) zu ermitteln und die jeweils ermittelte Sendeverzögerung (41) ebenfalls zu übermitteln, wobei die Lenkradeinheit (2) ferner derart ausgebildet ist, zumindest von der Radeinheit (3) übermittelte virtuelle Drehstabmomente (24) und/oder übermittelte verwendete Lenkradwinkelgeschwindigkeiten (33) auf Grundlage der jeweils übermittelten Sendeverzögerung (41) zu interpolieren.

6. Steer-by-Wire-Lenksystem (1) nach einem der vorangegangenen Ansprüche, **dadurch gekennzeichnet, dass** die Lenkradsteuerung (9) derart ausgebildet ist, den Lenkradaktor (8) zum aktiven Rückstellen des Lenkrads (5) anzusteuern.

7. Steer-by-Wire-Lenksystem (1) nach einem der vorangegangenen Ansprüche, **dadurch gekennzeichnet, dass** die Kommunikationsverbindung (4) als Controller Area Network-(CAN)-Bus oder FlexRay-Bus oder CAN FD-Bus ausgebildet ist.

8. Steer-by-Wire-Lenksystem (1) nach einem der vorangegangenen Ansprüche, **dadurch gekennzeichnet, dass** die Radsteuerung (12) eine Reibungskompensationseinrichtung (34) und/oder eine Trägheitskompensationseinrichtung (35) und/oder eine Stabilitäts- und Dynamikeinrichtung (36) umfasst.

9. Steer-by-Wire-Lenksystem (1) nach einem der vorangegangenen Ansprüche, **dadurch gekennzeichnet, dass** die Radsteuerung (12) ferner derart ausgebildet ist, das virtuelle Drehstabmoment (24) auf Grundlage von zumindest einer weiteren Eingangsvariable zu berechnen.

10. Verfahren zum Betreiben eines Steer-by-Wire-Lenksystems (1), wobei das Steer-by-Wire-Lenksystem (1) eine Lenkradeinheit (2), eine Radeinheit (3) und eine Kommunikationsverbindung (4) zwischen der Lenkradeinheit (2) und der Radeinheit (3) umfasst,
wobei die Lenkradeinheit (2) einen Lenkradwinkelsensor (7) zum Erfassen eines Lenkradwinkels (20) eines Lenkrads (5) des Fahrzeugs, einen Lenkradaktor (8) zum Einstellen eines Lenkrad-Sollmoments (21) an dem Lenkrad (5) und eine Lenkradsteuerung (9) zum Ansteuern des Lenkradaktors (8) zumindest auf Grundlage des Lenkrad-Sollmoments (21) aufweist, und
wobei die Radeinheit (3) einen Lenksensor (10) zum Erfassen mindestens einer Lenk-Istgröße (22), mindestens einen Radaktor (11) zum Einstellen einer Lenk-Sollgröße (23) und eine Radsteuerung (12) zum Ansteuern des Radaktors (11) aufweist,
**dadurch gekennzeichnet, dass**
die folgenden Schritte ausgeführt werden:
- Berechnen eines virtuellen Drehstabmoments (24) auf Grundlage der Lenk-Sollgröße (23) und der Lenk-Istgröße (22) mittels der Radsteuerung (12),
- Ansteuern des Radaktors (11) auf Grundlage des berechneten virtuellen Drehstabmoments (24) mittels der Radsteuerung (12),
- Übermitteln des berechneten virtuellen Drehstabmoments (24) über die Kommunikationsverbindung (4) an die Lenkradeinheit (2),
- Berechnen des Lenkrad-Sollmoments (21) auf Grundlage des übermittelten virtuellen Drehstabmoments (24) mittels der Lenkradsteuerung (9).

## Claims

1. Steer-by-wire steering system (1) for a vehicle, comprising:
a steering wheel unit (2),
a wheel unit (3), and
a communication link (4) between the steering wheel unit (2) and the wheel unit (3);
wherein the steering wheel unit (2) has a steering wheel angle sensor (7) for capturing a steering wheel angle (20) of a steering wheel (5) of the vehicle,
a steering wheel actuator (8) for setting a steering wheel target torque (21) on the steering wheel (5) and
a steering wheel controller (9) for activating the steering wheel actuator (8), at least on the basis of the steering wheel target torque (21); and
wherein the wheel unit (3) has a steering sensor (10) for capturing at least one actual steering value (22),
at least one wheel actuator (11) for setting a target steering value (23) and
a wheel controller (12) for activating the wheel actuator (11),
**characterized in that**
the wheel controller (12) is also designed to calculate a virtual torsion rod torque (24) on the basis of the target steering value (23) and the actual steering value (22) and to activate the wheel actuator (11) on the basis of the calculated virtual torsion rod torque (24) and
to transfer the calculated virtual torsion rod torque (24) via the communication link (4) to the steering wheel unit (2),
wherein the steering wheel controller (9) is also designed to calculate the steering wheel target torque (21) on the basis of the transferred virtual torsion rod torque (24).

2. Steer-by-wire steering system (1) according to Claim 1, **characterized in that** the wheel controller (12) is designed in such a way as to calculate the virtual torsion rod torque (24) on the basis of an angle difference between a target steering angle (25), specified by the steering wheel unit (2) by way of a transferred steering wheel angle (20), and an actual steering angle (26) derived from the captured actual steering value (22).

3. Steer-by-wire steering system (1) according to Claim 1 or 2, **characterized in that** the wheel controller (12) is also designed in such a way as to calculate a damping component (37) of the virtual torsion rod torque (24) on the basis of an angular velocity difference between a steering wheel angular velocity (28) transferred by the steering wheel unit (2) and a steering wheel angular velocity derived from captured actual steering values (22).

4. Steer-by-wire steering system (1) according to Claim 3, **characterized in that** the wheel controller (12) is also designed in such a way as to transfer the calculated damping component (37) and a steering wheel angular velocity (33) used by the wheel controller (12) to the steering wheel unit (2), wherein the steering wheel unit (2) is also designed in such a way as to correct the transferred virtual torsion rod torque (24) on the basis of the transferred damping component (37) and a steering wheel angular velocity (28) derived from currently captured steering wheel angles (20) and the transferred steering wheel angular velocity (33) used.

5. Steer-by-wire steering system (1) according to one of the preceding claims, **characterized in that** the steering wheel unit (2) is also designed in such a way as to determine a transmission delay (31) occurring in each case before the transfer and also to transfer the transmission delay (31) determined in each case, wherein the wheel unit (3) is also designed in such a way as to interpolate at least steering wheel angles (20) and/or steering wheel angular velocities (28) transferred by the steering wheel unit (2) on the basis of the transmission delay (31) transferred in each case and/or
**in that** the wheel unit (3) is also designed in such a way as to determine a transmission delay (41) occurring in each case before the transfer and to also transfer the transmission delay (41) determined in each case, wherein the steering wheel unit (2) is also designed in such a way as to interpolate at least virtual torsion rod torques (24) transferred by the wheel unit (3) and/or transferred steering wheel angular velocities (33) used on the basis of the transmission delay (41) transferred in each case.

6. Steer-by-wire steering system (1) according to one of the preceding claims, **characterized in that** the steering wheel controller (9) is designed in such a way as to activate the steering wheel actuator (8) to actively reset the steering wheel (5).

7. Steer-by-wire steering system (1) according to one of the preceding claims, **characterized in that** the communication link (4) is designed as a Controller Area Network (CAN) bus or a FlexRay bus or a CAN FD bus.

8. Steer-by-wire steering system (1) according to one of the preceding claims, **characterized in that** the wheel controller (12) comprises a friction compensation device (34) and/or an inertia compensation device (35) and/or a stability and dynamics device (36).

9. Steer-by-wire steering system (1) according to one of the preceding claims, **characterized in that** the wheel controller (12) is designed in such a way as to calculate the virtual torsion rod torque (24) on the basis of at least one further input variable.

10. Method for operating a steer-by-wire steering system (1), wherein the steer-by-wire steering system (1) comprises a steering wheel unit (2), a wheel unit (3) and a communication link (4) between the steering wheel unit (2) and the wheel unit (3),
wherein the steering wheel unit (2) has a steering wheel angle sensor (7) for capturing a steering wheel angle (20) of a steering wheel (5) of the vehicle, a steering wheel actuator (8) for setting a steering wheel target torque (21) on the steering wheel (5) and a steering wheel controller (9) for activating the steering wheel actuator (8) at least on the basis of the steering wheel target torque (21), and wherein the wheel unit (3) has a steering sensor (10) for capturing at least one actual steering value (22), at least one wheel actuator (11) for setting a target steering value (23) and a wheel controller (12) for activating the wheel actuator (11), **characterized in that**
the following steps are performed:
- calculating a virtual torsion rod torque (24) on the basis of the target steering value (23) and the actual steering value (22) by means of the wheel controller (12),
- activating the wheel actuator (11) on the basis of the calculated virtual torsion rod torque (24) by means of the wheel controller (12),
- transferring the calculated virtual torsion rod torque (24) via the communication link (4) to the steering wheel unit (2),
- calculating the steering wheel target torque (21) on the basis of the transferred virtual torsion rod torque (24) by means of the steering wheel controller (9).

## Revendications

1. Système de direction à commande électrique (1) destiné à un véhicule, ledit système comprenant :
une unité volant (2),
une unité roue (3), et
une liaison de communication (4) entre l'unité volant (2) et l'unité roue (3),
l'unité volant (2) comportant un capteur d'angle de volant (7) destiné à détecter un angle de volant (20) d'un volant (5) du véhicule,
un actionneur de volant (8) destiné à régler une couple de volant cible (21) au niveau du volant (5) et
une commande de volant (9) destinée à commander l'actionneur de volant (8) au moins sur la base du couple de volant cible (21), et
l'unité roue (3) comportant un capteur de direction (10) destiné à détecter au moins une grandeur de direction réelle (22),
au moins un actionneur de roue (11) destiné à régler une grandeur de direction cible (23) et une commande de roue (12) destinée à commander l'actionneur de roue (11),
**caractérisé en ce que**
la commande de roue (12) est également conçue pour calculer un couple de barre de torsion virtuel (24) sur la base de la grandeur de direction cible (23) et la grandeur de direction réelle (22) et pour commander l'actionneur de roue (11) sur la base du couple de barre de torsion virtuel (24) calculé, et
transmettre le couple de barre de torsion virtuel (24) calculé à l'unité volant (2) via la liaison de communication (4),
la commande de volant (9) étant en outre conçue pour calculer le couple de volant cible (21) sur la base du couple de barre de torsion virtuel (24) transmise.

2. Système de direction à commande électrique (1) selon la revendication 1, **caractérisé en ce que** la commande de volant (12) est conçue pour calculer le couple de barre de torsion virtuel (24) sur la base d'une différence angulaire entre un angle de direction cible (25), spécifié par l'unité volant (2) par le biais d'un angle de volant (20) transmis, et un angle de direction réel (26) dérivé de la grandeur de direction réelle (22) détectée.

3. Système de direction à commande électrique (1) selon la revendication 1 ou 2, **caractérisé en ce que** la commande de roue (12) est en outre conçue pour calculer une composante d'amortissement (37) du couple de barre de torsion virtuel (24) sur la base d'une différence de vitesse angulaire entre une vitesse angulaire de volant (28) transmise à l'unité volant (2) et une vitesse angulaire de volant dérivée des grandeurs de direction réelles (22) détectées.

4. Système de direction à commande électrique (1) selon la revendication 3, **caractérisé en ce que** la commande de roue (12) est en outre conçue pour transmettre la composante d'amortissement (37) calculée et une vitesse angulaire de volant (33) utilisée par la commande de roue (12) à l'unité volant (2),
l'unité volant (2) étant en outre conçue pour corriger le couple de barre de torsion virtuel (24) transmis sur la base du composant d'amortissement (37) transmis et d'une vitesse angulaire de volant (28) dérivée des angles de volant (20) actuellement détectés et de la vitesse angulaire de volant (33) utilisée transmise.

5. Système de direction à commande électrique (1) selon l'une des revendications précédentes, **caractérisé en ce que** l'unité volant (2) est en outre conçue pour déterminer un retard d'émission (31) survenant à chaque fois avant la transmission et pour transmettre également le retard d'émission (31) à chaque fois déterminé, l'unité volant (3) étant en outre conçue pour interpoler au moins des angles de volant (20) transmis par l'unité volant (2) et/ou des vitesses angulaires de volant (28) transmises sur la base du retard d'émission (31) à chaque fois transmis et/ou
l'unité roue (3) est également conçue pour déterminer un retard d'émission (41) qui survient à chaque fois avant la transmission et pour transmettre également le retard d'émission (41) à chaque fois déterminé, l'unité volant (2) étant en outre conçue pour interpoler au moins des couples de barre de torsion virtuels (24) transmis par l'unité roue (3) et/ou des vitesses angulaires de volant (33) utilisées transmises sur la base du retard d'émission (41) à chaque fois transmis.

6. Système de direction à commande électrique (1) selon l'une des revendications précédentes, **caractérisé en ce que** la commande de volant (9) est destinée à commander l'actionneur de volant (8) pour repositionner activement le volant (5).

7. Système de direction à commande électrique (1) selon l'une des revendications précédentes, **caractérisé en ce que** la liaison de communication (4) est réalisée sous la forme d'un bus CAN (Controller Area Network) ou d'un bus FlexRay ou d'un bus CAN FD.

8. Système de direction à commande électrique (1) selon l'une des revendications précédentes, **caractérisé en ce que** la commande de volant (12) comprend un dispositif de compensation de friction (34) et/ou un dispositif de compensation d'inertie (35) et/ou un dispositif de stabilité et de dynamique (36).

9. Système de direction à commande électrique (1) selon l'une des revendications précédentes, **caractérisé en ce que** la commande de volant (12) est en outre conçue pour calculer le couple de barre de torsion virtuel (24) sur la base d'au moins une autre grandeur d'entrée.

10. Procédé de fonctionnement d'un système de direction à commande électrique (1), le système de direction à commande électrique (1) comprenant une unité volant (2), une unité roue (3) et une liaison de communication (4) entre l'unité volant (2) et l'unité roue (3),
l'unité volant (2) comportant un capteur d'angle de volant (7) destiné à détecter un angle de volant (20) d'un volant (5) du véhicule, un actionneur de volant (8) destiné à régler un couple de volant cible (21) au niveau du volant (5) et une commande de volant (9) destinée à commander l'actionneur de volant (8) au moins sur la base du couple de volant cible (21), et l'unité roue (3) comportant un capteur de direction (10) destiné à détecter au moins une grandeur de direction réelle (22), au moins un actionneur de roue (11) destiné à régler une grandeur de direction cible (23) et une commande de roue (12) destinée à commander l'actionneur de roue (11),
**caractérisé en ce que**
les étapes suivantes sont réalisées :
- calculer un couple de barre de torsion virtuel (24) sur la base de la grandeur de direction cible (23) et de la grandeur de direction réelle (22) au moyen de la commande de volant (12),
- commander l'actionneur de roue (11) au moyen de la commande de roue (12) sur la base du couple de barre de torsion virtuel (24) calculé,
- transmettre le couple de barre de torsion virtuel (24) calculé via la liaison de communication (4) à l'unité volant (2),
- calculer le couple volant cible (21) au moyen de la commande de volant (9) sur la base du couple de barre de torsion virtuel (24) transmis.
